# EUROPEAN PATENT SPECIFICATION

(11) **EP 2 687 865 B1**
(45) Date of publication and mention of the grant of the patent: **09.11.2016**
(21) Application number: 13176715.4
(22) Date of filing: 16.07.2013
(51) Int. Cl.: G01S 7/481, G01S 17/02, G02B 26/10, G02B 26/12, G02B 7/182

(54) **Object detecting apparatus**
Objekterkennungsvorrichtung
Appareil de détection d'objets

(30) Priority: 18.07.2012 JP 2012159201
(43) Date of publication of application: 22.01.2014
(73) Proprietor: Ricoh Company, Ltd., Tokyo 143-8555 (JP)
(72) Inventor: IMAI, Shigeaki, Tokyo 143-8555 (JP); NAKAMURA, Tadashi, Tokyo 143-8555 (JP); SUZUKI, Shuichi, Tokyo 143-8555 (JP); NAKAJIMA, Mitsuru, Tokyo 143-8555 (JP); YOSHIMURA, Kenichi, Tokyo 143-8555 (JP); FUNATO, Hiroyoshi, Tokyo 143-8555 (JP)
(74) Representative: Leeming, John Gerard

(56) References cited:
- EP-A2- 2 120 302
- US-A- 5 648 852
- US-A1- 2010 124 434

## Description

The disclosures herein generally relate to an object detecting apparatus.

Conventionally, an object detecting apparatus that detects existence or non-existence of an object or detects the distance to the object is known. As an example of an object detecting apparatus, a laser radar can be listed, which is an in-vehicle device configured to detect existence or non-existence of an object in front of a moving vehicle, or to detect the distance to the object.

The laser radar, by scanning with a laser light radiated from a light source using a rotating mirror and detecting a light reflected or scattered by an object using a light detecting device, includes a function to detect existence or non-existence of an object within an intended range, and to detect the distance to the object. Also, a laser radar that can detect multiple layers layered orthogonal to a scanning direction is known and this type of the laser radar is implemented by using a polygonal mirror with different inclining angles.

[Patent document 1] Japanese Patent Application Publication No. 09-274076 discloses related prior art.

However, there is a problem that the scanning line (scanning beam locus) becomes bent because a polygonal mirror with different inclining angles is used.

Also, an optical system of a light-receiving side of the laser radar is implemented using a lens and a light detecting device, but with this configuration, because it is necessary to detect all of the scanning area, there is a risk that the light detecting device becomes big and expensive. In order to make the light detecting device small it is necessary to make the focal length of the lens short, and as a result, the effective area of the lens becomes small, the receivable amount of light decreases, and the distance detection capability becomes lowered (becomes unable to detect at the far distance).

US 5,648,852 discloses a laser beam type distance measuring device comprising a laser beam emitter; a returning laser beam detector; a polygon mirror rotated about a first axis for reflecting the laser beam toward a remote object and a returning laser beam toward the returning laser beam detector; and a nodding mechanism for pivoting the polygon mirror about a second axis which is perpendicular to the first axis.

US 2010/0124434 A1 and EP 2 120 302 A2 disclose optical scanning devices including a polygon mirror.

It is a general object of at least one embodiment of the present invention to provide an object detecting apparatus capable of improving the curving of the scanning line and the distance detection capability that obviates one or more problems described above. The present invention is defined by the appended claims.

According to the disclosed technology, an object detecting apparatus is provided that is capable of improving the bending of the scanning line and the lowered distance detection capability.

In the accompanying drawings:-
FIGs. 1A and 1B are diagrams illustrating an optical system of a light radiating side of an object detecting apparatus of a first embodiment of the present invention.
FIGs. 2A and 2B are diagrams illustrating an optical system of a light receiving side of an object detecting apparatus of the first embodiment of the present invention.
FIGs. 3A, 3B, 3C and 3D are diagrams illustrating a rotating mirror of an object detecting apparatus of the first embodiment of the present invention.
FIG. 4 is a diagram (No.l) illustrating an optical system of a light radiating side of an object detecting apparatus of a comparative example.
FIGs. 5A, 5B and 5C are graphs illustrating a simulation result (parallel to XZ-plane, and, θiux = 90 degrees incident).
FIGs. 6A, 6B and 6C are graphs illustrating a simulation result (parallel to XZ-plane, and, θiux = 20 degrees incident).
FIG. 7 is a diagram (No.2) illustrating an optical system of a light radiating side of an object detecting apparatus of a comparative example.
FIGs. 8A, 8B and 8C are graphs illustrating a simulation result (parallel to the X-Y plane, and, θisx = 90 degrees incident).
FIGs. 9A, 9B and 9C are graphs illustrating a simulation result (parallel to the X-Y plane, and, θisx = 60 degrees incident).
FIGs. 10A, 10B and 10C are graphs illustrating a simulation result (parallel to the X-Y plane, and, θisx = 45 degrees incident).
FIGs. 11A, 11B and 11C are graphs illustrating a simulation result (parallel to the X-Y plane, and, θisx = 30 degrees incident).
FIG. 12 is a drawing in which overlapping ranges of areas of a layer 1 and a layer 2 are plotted.
FIGs. 13A and 13B are diagrams illustrating an optical system of a light receiving side of an object detecting apparatus of a modification 3 of the first embodiment of the present invention.
FIGs. 14A and 14B are diagrams illustrating an optical system of a light receiving side of an object detecting apparatus of a modification 4 of the first embodiment of the present invention.

In the following, embodiments of the present invention will be described with reference to the accompanying drawings. In each drawing, the same numerical referral is given to the same configuration element, and there is a case where duplicated description is omitted.

### <a first embodiment of the present invention>

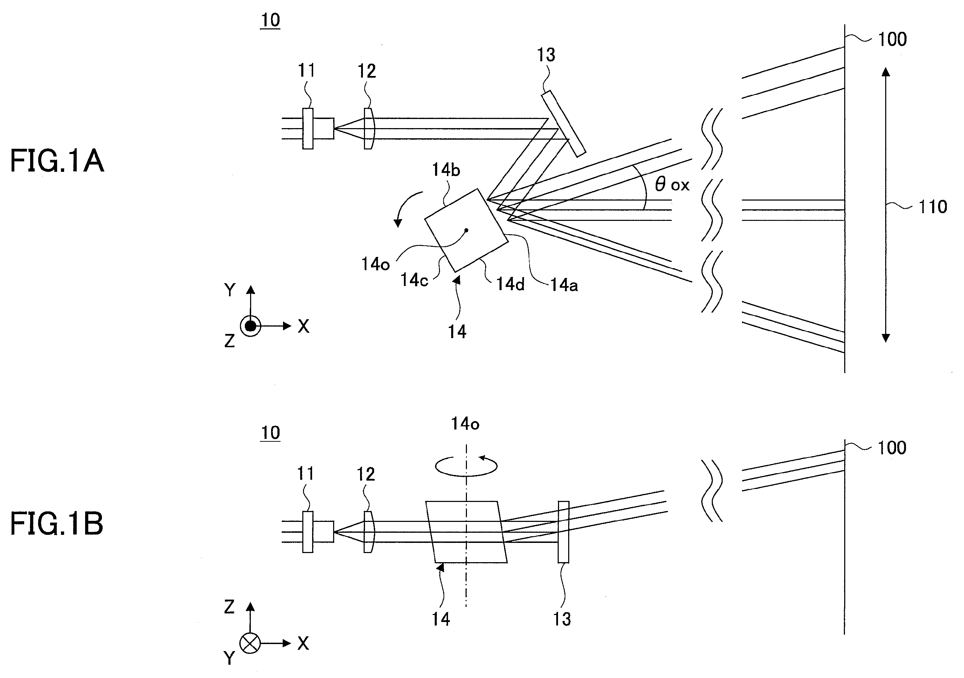

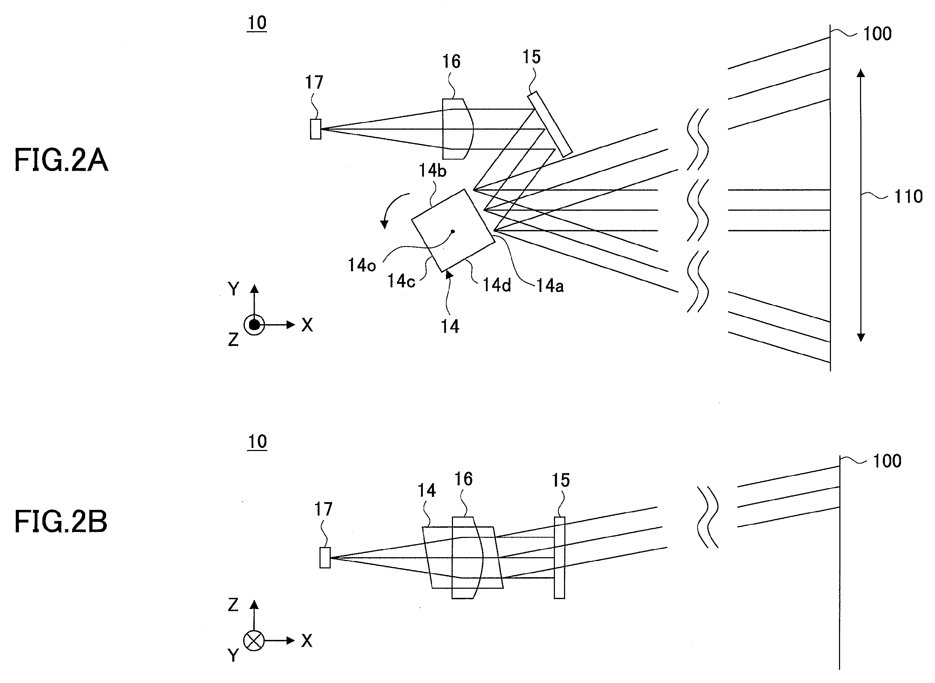

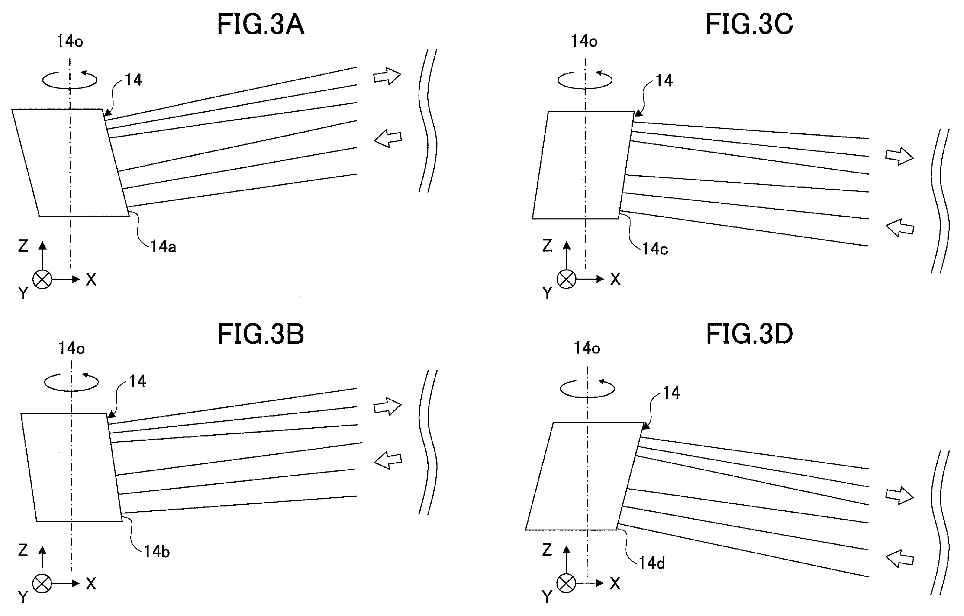

FIGs. 1A and 1B are diagrams illustrating an optical system of a light radiating side of an object detecting apparatus 10, where FIG. 1A shows a cross-section parallel to the X-Y plane, and FIG. 1B shows a cross-section parallel to the X-Z plane. Also, FIGs. 2A and 2B are diagrams illustrating an optical system of a light receiving side of the object detecting apparatus 10 of the first embodiment of the present invention, where FIG. 2A shows a cross-section parallel to the X-Y plane, and FIG. 2B shows a cross-section parallel to the X-Z plane. FIGs. 3A, 3B, 3C and 3D are diagrams illustrating a rotating mirror 14 of the object detecting apparatus 10 of the first embodiment of the present invention, and cross-sections parallel to the X-Z plane are shown.

Referring to FIGs. 1A through 3D, the object detecting apparatus 10 includes, roughly speaking, a light source 11, a coupling lens 12, a reflecting mirror 13, the rotating mirror 14, a reflecting mirror 15, an image forming lens 16 and a light detecting device 17. Note that 100 indicates an image surface of an object of a detection target, 110 indicates a detection range, and θox indicates an angle that light reflected by the reflecting mirror 13 makes, after being reflected by a reflecting unit of the rotating mirror 14, with the X axis on the X-Y plane. θox can be, for example, -20 through 20 degrees.

Note that the coordinate axes are of a three dimension orthogonal coordinate system in which an X axis is directed from the rotating mirror 14 to the center of the detection range 110 (predefined range of an object), a Y axis is directed in a scanning direction of the rotating mirror 14, and a Z axis is directed in an axial direction of a rotational axis 14o of the rotating mirror 14 (the same applies for the figures discussed later).

Regarding the light source 11, a solid state light source, for example, a semiconductor laser, a light emitting diode, etc., can be used. In the present embodiment, using a semiconductor laser as the light source 11, and taking a case in which the light beam is pulse- emitted from the semiconductor laser as an example, will be described below.

The coupling lens 12 is located at a subsequent stage in the optical path of the light source 11. Note that the coupling lens 12 may be configured as a combination of a plurality of optical elements. The coupling lens 12 has a function for converging a diverging light beam emitted from the light source 11. In the present embodiment, the coupling lens 12 is placed so that the diverging light beam emitted from the light source 11 becomes almost parallel light, but there may be a case where the light transmitted through the coupling lens becomes approximately diverging light due to the influence of a light emitting width of the light emitting unit of the light source 11 (semiconductor laser).

The light beam transmitted through the coupling lens 12 is irradiated on the reflecting mirror 13, where the optical path of the light beam is changed, and the light beam is reflected onto the rotating mirror 14. The angle difference in the X-Y plane between the light beam irradiated on the reflecting mirror 13 and the light beam reflected by the reflecting mirror 13 can be, for example, around 60 degrees. The rotating mirror 14 includes at least two reflecting units (reflecting faces); the reflecting units are placed on the rotating mirror 14 inclined relative to the rotational axis 14o of the rotating mirror 14 with different inclining angles. Note that the reflecting mirror 13 is a typical example of reflecting material of the light radiating side. Also, the rotating mirror 14 is a typical example of a deflecting unit of the present embodiment.

In the present embodiment, the rotating mirror 14 includes four reflecting units 14a, 14b, 14c, and 14d, and as shown in FIGs. 3A, 3B, 3C and 3D, the inclining angles of the reflecting units 14a, 14b, 14c, and 14d relative to the rotational axis 14o are set different from each other. By this, it becomes possible to switch the angle relative to the X-Y plane of the optical path of the light beam reflected by the rotating mirror 14, and to move a detecting layer in the Z axis direction in accordance with the reflecting units 14a, 14b, 14c, and 14d. In the case of FIGs. 3A, 3B, 3C and 3D, it is possible to detect four layers.

The light irradiated on the rotating mirror 14 is deflected by the rotating reflecting units 14a, 14b, 14c, and 14d, and is transmitted onto and caused to scan the detection range 110 (predefined range of an object) of the image surface 100. The reflected light or the scattered light from the detection range 110 of the image surface 100 is transmitted onto the rotating mirror 14 again, is reflected sequentially by the reflecting units 14a, 14b, 14c, and 14d, and is transmitted onto the light detecting device 17 through the reflecting mirror 15 and the image forming lens 16. As the light detecting device 17, for example, an APD (Avalanche Photo Diode), or a PPD (PIN Photo Diode) can be used.

It is preferable that the image forming lens 16 is rectangular shaped. In the case of FIGs. 2A and 2B, the rectangular shape includes the sides parallel to the X-Y surface and the X-Z surface. The reason is that, compared to an ellipse shaped image forming lens, it can make the light use efficiency higher. In the case where a single image forming lens 16 is placed for the light receiving side as in FIGs. 2A and 2B, it is preferable to make the conjugate point of the image forming lens 16 of the light detecting device 17 be at infinity. The reason is that the amount of light to be detected by the light detecting device 17 can be increased. Note that the reflecting mirror 15 is a replaceable example of a reflecting material of the light receiving side of the present invention. Also, the image forming lens 16 is a replaceable example of an image forming unit of the present invention.

Note that if the optical system of the light receiving side is configured only with a lens and a light detecting device, without using a rotating mirror, then there will be a concern that the light detecting device may become bigger and the cost may become higher. Also, if one tries to avoid the concern, then there could be a concern that the receivable amount of light at the light receiving device may decrease and the distance detecting capability may decrease (become incapable of detecting far).

As in an embodiment of the present invention, as a result of including a rotating mirror in the optical system of the light receiving side, it is prevented that the light detecting device becomes big and the receivable amount of light at the light detecting device becomes decreased; thus problems of the conventional examples described above can be resolved. However, in the case where the rotating mirror is used for switching the layer for scanning, depending on the configuration of the optical system, problems may occur such as the bending of the radiated beam's trajectory or the detecting area's trajectory, and the distortion of the radiated beam or the detecting area.

And so, in the object detecting apparatus 10 of the present embodiment, the travel direction of the light emitted from the light source 11 and transmitted onto each reflecting unit of the rotating mirror 14 is configured to be parallel to the X-Y plane and the angle of the travel direction of the light with respect to the X axis is configured to be less than 90 degrees. Also, the travel direction of the reflected light or the scattered light, which is reflected by each reflecting unit and is to be transmitted orthogonal onto the center of the receiving surface of the light detecting device 17, is configured to be parallel to the X-Y plane and the angle of the travel direction of the light with respect to the X axis is configured to be less than 90 degrees. As a result, in the object detecting apparatus 10, the bending of the scanning line (inclination of the scanning line) and the decreasing of distance detecting capability can be reduced compared to the conventional art.

Note that "parallel to the X-Y plane" should include not only the case of being strictly parallel to the X-Y plane but also the case of being approximately parallel within a range in which the predefined effects of the present embodiment are not reduced. In the following, it will be described in detail with comparative examples that in the object detecting device 10, the bending of the scanning line (inclination of the scanning line) and the decreasing of distance detecting capability can be reduced compared to the conventional art.

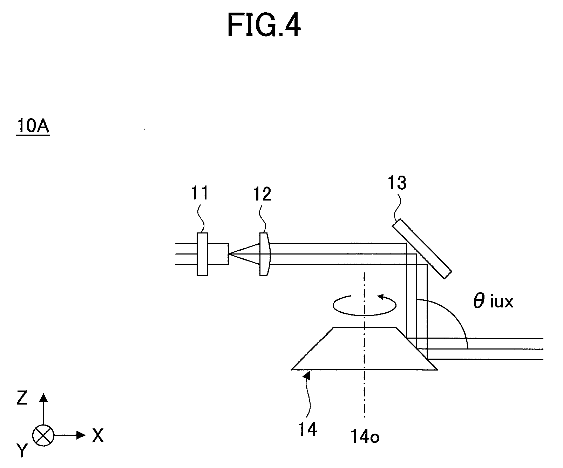

FIG. 4 is a diagram (No.1) illustrating an optical system of a light radiating side of an object detecting apparatus 10A of a comparative example, and illustrating a cross-section parallel to the X-Z plane. In the object detecting apparatus 10A shown in FIG. 4, each of four reflecting units of the rotating mirror 14 is placed with 45 degrees inclination from the rotational axis 14o. Also, the light reflected by the reflecting mirror 13 is transmitted as light parallel to the rotational axis 14o of the rotating mirror 14 (parallel to the X-Z plane) onto the reflecting units of the rotating mirror 14, and deflected in a direction parallel to the X-Y plane by the reflecting units of the rotating mirror 14. That is, in FIG. 4, θiux = approximately 90 degrees.

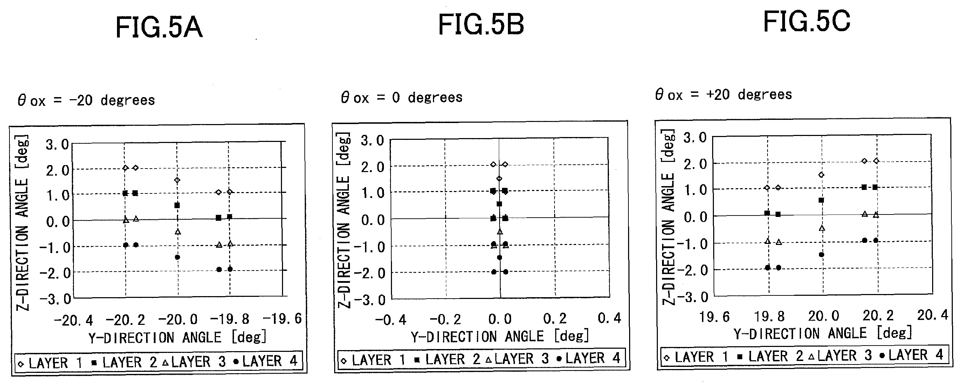

In the optical system shown in FIG. 4, as shown in FIGs. 5A, 5B and 5C, the light beam irradiated on the image surface (radiated beam) and the detection range are distorted. FIGs. 5A, 5B and 5C are graphs illustrating a simulation result in the case of scanning four layers (layer 1, layer 2, layer 3, and layer 4) in the optical system shown in FIG. 4. Note that, in FIGs. 5A, 5B and 5C, the horizontal axis is the Y-direction angle (angle with the X axis on the X-Y plane) of the light beam irradiated on the image surface, and the Y-direction angle is zero degrees when the light beam is on the X axis, and is plus degrees when the light beam moves in the plus Y axis direction.

Also, in FIGs. 5A, 5B and 5C, assuming that the light source 11 is an area light source with rectangular shape, beams of the four corners and a beam of the center portion are traced and plotted. Note that in the light source 11, the width in the Z axis direction is configured to be 235 µm, and the width vertical to it is configured to be 10 µm. Also, the focal length of the coupling lens 12 is configured to be 13 mm.

FIGs. 5A, 5B and 5C illustrate the simulation results of the cases where the θox in FIG. 1A is -20 degrees, 0 degrees, and +20 degrees, respectively. The θox is an angle of the light with the X axis on the X-Y plane, the light being reflected by the reflecting mirror 13 after being reflected by the reflecting unit of the rotating mirror 14, and because there is no optical element placed in the subsequent stage of the rotating mirror 14 in FIGs. 1A and 1B, the θox is the same as the "Y-direction angle" above.

Note that in the optical system shown in FIG. 4, inclination angles of the reflecting units of the rotating mirror 14 are tuned in such a way that the Z-direction angle of the layer 1 is 1 to 2 degrees, the Z-direction angle of the layer 2 is 0 to 1 degrees, the Z-direction angle of the layer 3 is -1 to 0 degrees, the Z-direction angle of the layer 4 is -2 to -1 degrees. Also, the scattering state of the light transmitted through the coupling lens 12 is tuned in such a way that the angle range of 1 degree in width can be detected in each layer.

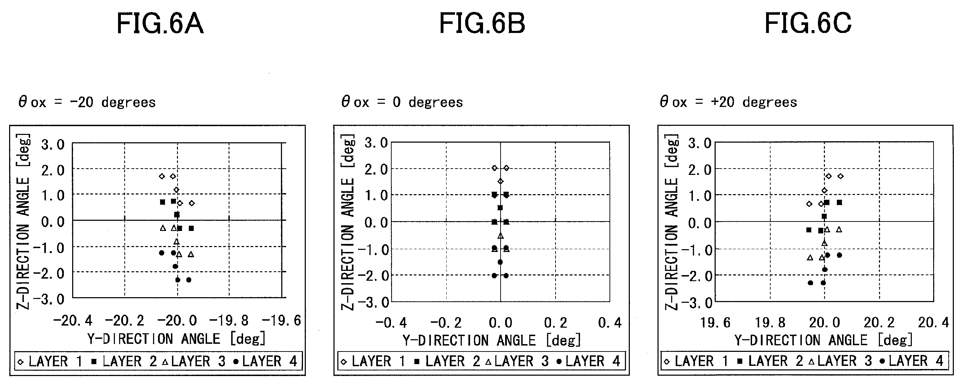

As shown in FIGs. 5A, 5B and 5C, the bigger the θox becomes, the more the distortion of the light beam irradiated on the image surface becomes. When the light beam irradiated on the image surface is distorted like this, it is not preferable because the angle resolution for the scanning direction becomes low in the area in which the θox is big. The distortion of the light beam irradiated on the image surface described above tends to be reduced by reducing the θiux shown in FIG. 4. FIGs. 6A, 6B and 6C are an example in which the light is irradiated on the rotating mirror 14 from a direction in which the θiux = 20 degrees and which is parallel to the X-Z plane, but still it is not preferable because the distortion of the light beam irradiated on the image surface is occurring to the extent that cannot be ignored.

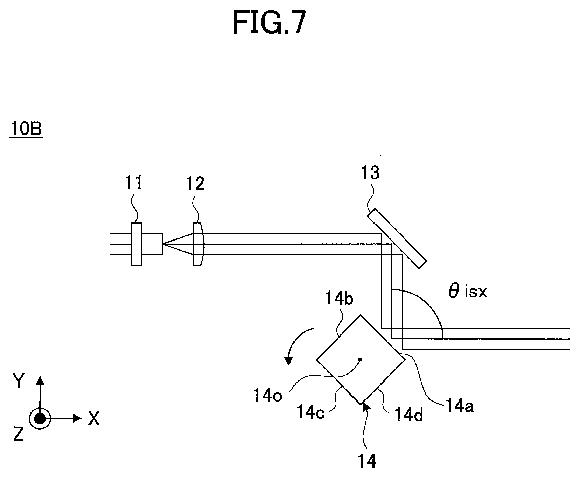

The distortion of the light beam irradiated on the image surface described above can be reduced by the configuration of the optical system shown in FIG. 7.

FIG. 7 is a diagram (No.2) illustrating an optical system of a light radiating side of an object detecting apparatus 10B of a comparative example, and illustrating a cross-section parallel to the X-Y plane. In the object detecting apparatus 10B shown in FIG. 7, the light reflected by the reflecting mirror 13 is transmitted as light perpendicular to the rotational axis 14o of the rotating mirror 14 (parallel to the X-Y plane) onto the reflecting units of the rotating mirror 14. Also, in FIG. 7, the angle of the travel direction of the light reflected by the reflecting mirror 13 and transmitted onto each reflecting unit with the X axis θisx = approximately 90 degrees.

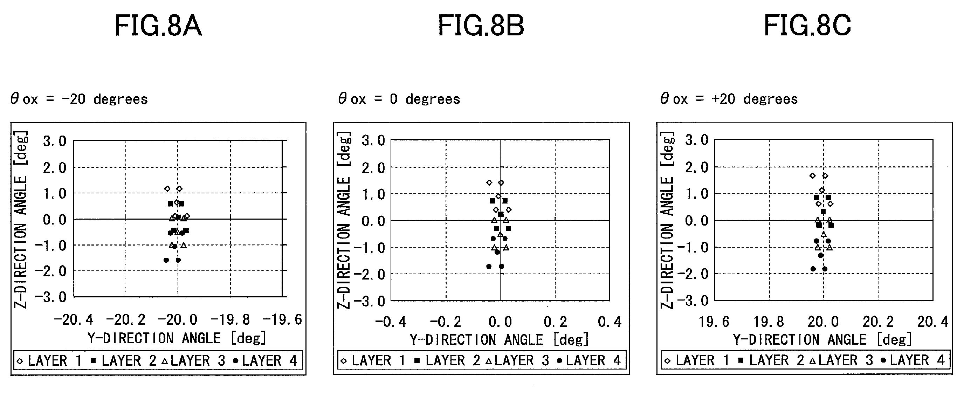

FIGs. 8A, 8B and 8C are drawings illustrating a simulation result in the case of scanning four layers (layer 1, layer 2, layer 3, and layer 4) in the optical system shown in FIG. 7. As shown in FIG. 8A, 8B and 8C, compared to the case of FIGs. 6A, 6B and 6C, the distortion of the light beam irradiated on the image surface can be reduced to the extent that it can be ignored. However, in this case, a problem that the scanning trajectory (scanning line) becomes slanted (bent) occurs.

That is, as shown in FIGs. 8A, 8B and 8C, the light beam irradiated on the image surface with the layer 1 at θox = +20 degrees is at a location close to the targeted value range of 1 to 2 degrees, but the light beam irradiated on the image surface with the layer 1 at θox = -20 degrees has a bigger deviation from the targeted value range of 1 to 2 degrees. That is, the scanning line is slanted.

In order to reduce the deviation, it is necessary to make the light reflected by the reflecting mirror 13 and transmitted onto each reflecting unit be parallel to the X-Y plane and at the same time to make the angle of the travel direction of that light with respect to the X axis θisx be less than 90 degrees.

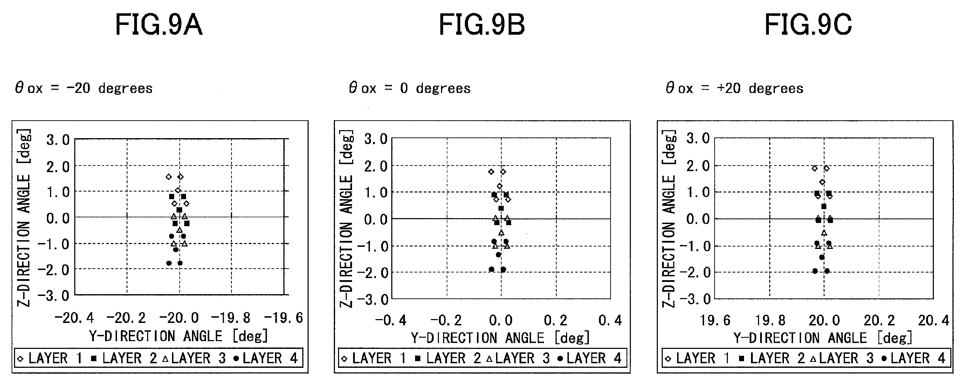

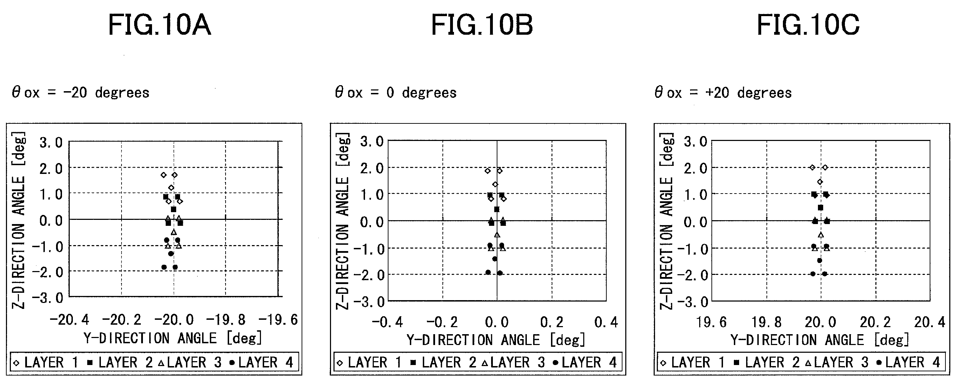

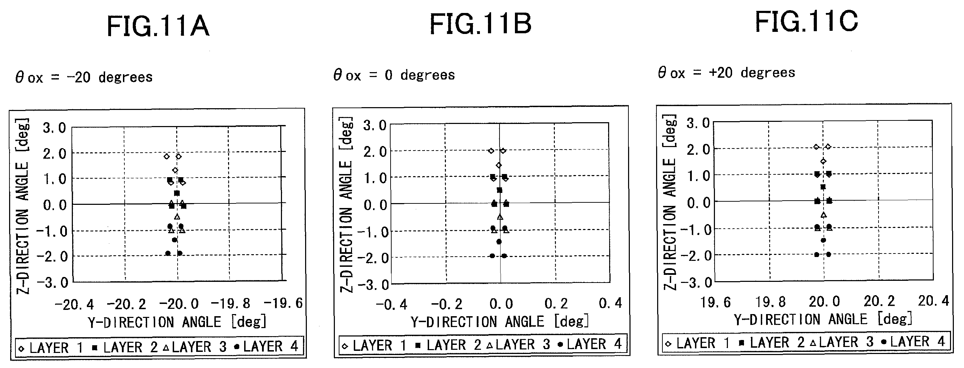

FIGs. 9A through 11C are graphs illustrating simulation results in the case of scanning four layers (layer 1, layer 2, layer 3, and layer 4) in the optical system according to the present embodiment. That is, they are graphs illustrating simulation results in the case of scanning four layers (layer 1, layer 2, layer 3, and layer 4) in the optical system in which the light reflected by the reflecting mirror 13 is transmitted onto each reflecting unit of the rotating mirror 14 in such a way that the travel direction of the light is parallel to the X-Y plane and the angle of the travel direction of the light with respect to the X axis θisx is less than 90 degrees. FIGs. 9A, 9B and 9C illustrate the case where θisx is 60 degrees, FIGs. 10A, 10B and 10C illustrate the case where θisx is 45 degrees, and FIGs. 11A, 11B and 11C illustrate the case where θisx is 30 degrees.

As shown in FIGs. 9A through 11C, by making the travel direction of the light reflected by the reflecting mirror 13 and transmitted onto each reflecting unit be parallel to the X-Y plane and at the same time making the angle of the travel direction of that light with respect to the X axis θisx be less than 90 degrees, the following effects are obtained. That is, the light beam irradiated on the image surface with the layer 1 at θox = +20 degrees and at θox = 0 degree is at a location close to the targeted value range of 1 to 2 degrees; plus, the deviation for the light beam irradiated on the image surface with the layer 1 at θox = -20 degrees from the targeted value range of 1 to 2 degrees is smaller compared to FIGs. 8A, 8B and 8C. That is, the slant of the scanning line is reduced compared to FIGs. 8A, 8B and 8C.

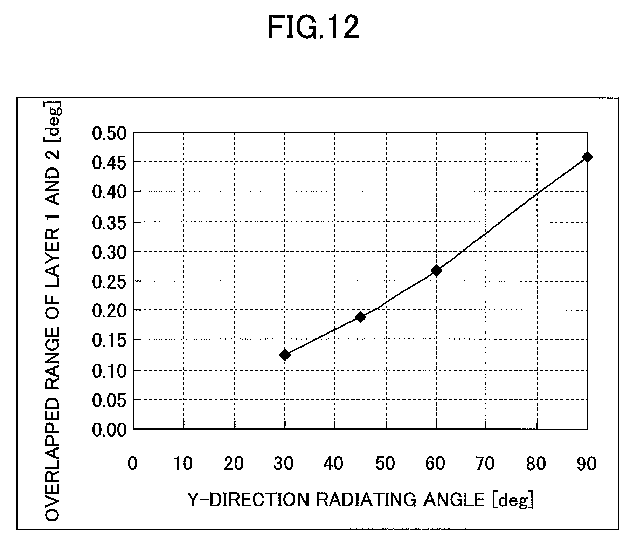

In FIGs. 9A through 11C, it is understood that the degree of the slant varies depending on the layer, and as a result, overlaps among the layers occur. FIG. 12 is a drawing in which overlapping ranges of areas of the layer 1 and the layer 2 are plotted. In FIG. 12, the horizontal axis indicates the Y-direction angle (θisx in FIG. 7) and the vertical axis indicates the overlapping range [deg] of the layer 1 and the layer 2.

It is known that there will be practically no problem to occur if the overlapping range of the areas of the layer 1 and the layer 2 is equal to or less than the 30% of the detection range of each layer. If this knowledge is taken into account, it is understood from FIG. 12 that it is further preferable when the angle of the travel direction of the light irradiated on each of the reflecting units of the rotating mirror 14 with respect to the X axis is made equal to or less than 65 degrees.

Also, if the angle of the travel direction of the light irradiated on each of the reflecting units of the rotating mirror 14 with respect to the X axis becomes less than 30 degrees, then the light reflected by the rotating mirror 14 becomes easily blocked by the reflecting mirror 13 of the radiating side. Therefore, it is further preferable to make the angle of the travel direction of the light irradiated on each of the reflecting units of the rotating mirror 14 with respect to the X axis θisx be equal to or more than 30 degrees.

In the simulation results of FIGs. 9A through 11C, the case where the biggest overlap of the layers occurs is a case where θox is -20 degrees (away from the light source). From the point above and the point that it is preferable for the angle of the travel direction of the light irradiated on each of the reflecting units of the rotating mirror 14 with respect to the X axis to be equal to or less than 65 degrees, the following can be said.

That is, it is preferable to make an angle equal to or less than 20 + 65 = 85 degrees when the light beam is caused to scan an image surface, the angle being between the travel direction of the light irradiated onto the reflecting unit of the rotating mirror 14 and a travel direction of the reflected light deflected by the same reflecting unit of the rotating mirror 14. By making the angle this way, the distortion of the light beam irradiated on the image surface and the bending of the scanning locus (scanning line) can be reduced.

As described above, in the object detecting apparatus 10 of the present embodiment, the travel direction of the light, which is irradiated on each of the reflecting units of the rotating mirror 14 through the reflecting mirror 13 and emitted from the light source, is configured to be parallel to the X-Y plane, and the angle θisx of the light, with respect to the X axis, is configured to be less than 90 degrees. By this, the distortion of the light beam irradiated on the image surface and the slant (bending) of the scanning locus (scanning line) can be reduced. Also, by including a rotating mirror in the optical system of the light receiving side, it is prevented that the light detecting device becomes big and the receivable amount of light at the light detecting device becomes decreased. As a result, it can be prevented that the distance detection capability becomes lowered (becomes unable to detect the far distance).

However, as described above, it is further preferable to make the travel direction of the light irradiated on each of the reflecting units of the rotating mirror 14 parallel to the X-Y plane, and to make the angle θisx with respect to the X axis be equal to or more than 30 degrees and equal to or less than 65 degrees.

Note that if the angle θisx between the travel direction of the light irradiated on each of the reflecting units of the rotating mirror 14 and the X axis is set as equal to or more than 90 degrees, then not only is it not preferable because the bending of the scanning line becomes big, but also there is a risk that the amount of light irradiated on the image surface becomes decreased because it becomes easy for the light reflected by the reflecting mirror 13 to not be reflected by each of the reflecting units of the rotating mirror 14. It is not preferable, also from this aspect, to set the angle θisx between the travel direction of the light irradiated on each of the reflecting units of the rotating mirror 14 and the X axis equal to or more than 90 degrees.

So far, a case has been described for the optical system of the light radiating side, but a similar effect can be obtained for the optical system of the light receiving side. That is, if the light source 11 is replaced by the light detecting device 17, the coupling lens 12 is replaced by the image forming lens 16, and the detection range of the image surface is replaced by the detection range of the light detecting device 17, the same case can be applied for the light receiving side.

That is, one only has to make the reflected light or the scattered light reflected by the reflecting unit be transmitted orthogonal onto the center of the receiving surface of the light detecting device 17 parallel to the X-Y plane, and to make its angle of with respect to the X axis be less than 90 degrees. By doing this, the distortion of the light beam irradiated on the detecting area of the light detecting device 17 and the slant (the bending) of the scanning locus (scanning line) can be reduced.

Also, in the optical system of the light receiving side, too, it is further preferable that the reflecting light or the scattered light deflected by the reflecting unit and transmitted orthogonal onto the center of the receiving surface of the light detecting device 17 be made parallel to the X-Y plane and its angle with respect to the X axis be made equal to or more than 30 degrees and equal to or less than 65 degrees. By making the angle with respect to the X axis be equal to or less than 65 degrees, similar to the optical system of the light radiating side, the overlapped detecting areas among the layers can be reduced to the level in which practically no problems occur. Furthermore, by making the angle with respect to the X axis be equal to or less than 30 degrees, it can be prevented that the light from the object is to be blocked by the reflecting mirror 15 of the light receiving side.

Note that it is preferable that the angle of the travel direction of the light irradiated onto each of the reflecting units of the rotating mirror 14 with respect to the X axis is the same as the angle of the travel direction of the reflected light or the scattered light deflected by the reflecting units and transmitted orthogonal onto the center of the receiving surface of the light detecting device 17. The reason is that if these angles are not the same, then there will be a gap in the Z direction between the detection range 110 and the detecting area of the light detecting device 17, and there will be a risk of reduced object detection accuracy. By making these angles the same, stable detection will be available because the bending shape of the scanning locus (scanning line) in the detection range on the image surface and the bending shape of the scanning locus (scanning line) in the detecting area of the light detecting device 17 can be made almost the same.

Note that "making the angles the same" includes not only a case where the angles are made exactly the same, but also a case where the angles are made approximately the same in the range in which predefined effects of the present embodiment are not damaged.

### <Modification 1 of the first embodiment>

In the first embodiment, an example in which a single (common) rotating mirror 14 is used for the light radiating side and the light receiving side is described. That is, in the rotating mirror 14, reflecting units for reflecting light emitted from the light source are integrated with reflecting units for reflecting the reflected light or the scattered light from a predefined range of the object. But rotating mirrors may be placed for both the light radiating side and the light receiving side. In this case, the same effects can be achieved by rotating the mirror of the light radiating side and rotating the mirror of the light receiving side at the same time.

Note that in the case of placing rotating mirrors for the light radiating side and the light receiving side, respectively, it is preferable that there are no relative gaps in the angles between the corresponding reflecting units of the rotating mirrors. From this aspect, especially over time, the first embodiment of the present invention is more preferable, in which the single (common) rotating mirror 14 is used for the light radiating side and the light receiving side, because the relative gaps in the angles between the corresponding reflecting units of the rotating mirrors (relative gaps in the angles between the light beams of the light radiating side and the light receiving side) can be reduced, and the stable detection can be available.

### <Modification 2 of the first embodiment>

In the first embodiment of the present invention, an example is shown in which the reflecting mirrors 13 and 15 are placed for the light radiating side and the light receiving side, respectively. But, a single (common) reflecting mirror may be placed for both the light radiating side and the light receiving side. That is, a reflecting mirror of the light radiating side may be integrated with a reflecting mirror of the light receiving side.

If reflecting mirrors are placed for the light radiating side and the light receiving side, respectively, then, especially over time, there is a risk that the relative gap in the angles of the reflecting mirrors (the relative gap in the angles of the light beams of the light radiating side and the light receiving side) may occur and the detection accuracy may decrease. In order to avoid this problem, it is preferable that a reflecting mirror of the light radiating side is integrated with a reflecting mirror of the light receiving side.

Note that it is possible that the optical system does not include any reflecting mirror in the light radiating side nor the light receiving side. But if the angle between the travel direction of the light irradiated on each of the reflecting units of the rotating mirror and the X axis is made less than 90 degrees, then there is a risk that the object detecting apparatus may become bigger because the light source is to be placed to the image surface side with respect to the rotating mirror. In order to avoid this problem, it is preferable that the reflecting mirrors are provided for the light radiating side and the light receiving side, respectively.

### <Modification 3 of the first embodiment>

In the modification 3 of the first embodiment, an example will be described in which a plurality of image forming lenses are placed in the light receiving side. Note that in the modification 3 of the first embodiment, there is a case in which descriptions for configuring elements that are the same as in the embodiments already described above may be omitted.

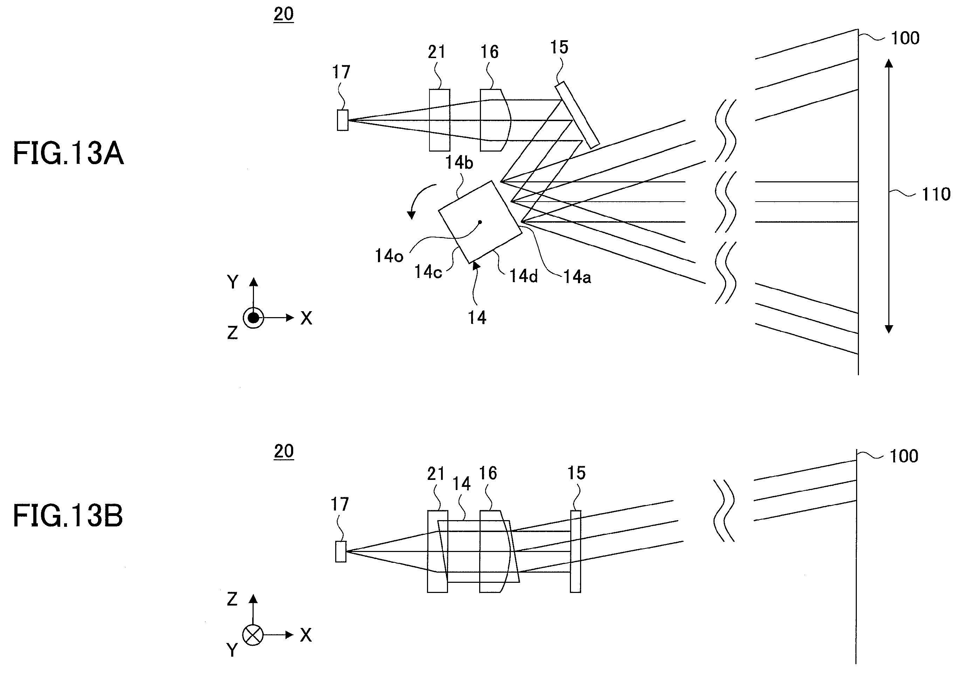

FIGs. 13A and 13B are diagrams illustrating an optical system of a light receiving side of an object detecting apparatus 20 of the modification 3 of the first embodiment of the present invention, where FIG. 19A indicates a cross section parallel to the X-Y plane and FIG. 13B indicates a cross section parallel to the X-Z plane.

Referring to FIGs. 13A and 13B, regarding the object detecting apparatus 20, it is different from the object detecting apparatus 10 of the first embodiment of the present invention in that the image forming lens 21 is added in the optical path between the image forming lens 16 and the light detecting device 17.

In the case where a single image forming lens 16 is placed for the light receiving side and is configured in a rectangular shape according to the object detecting apparatus 10 of the first embodiment of the present invention, the end portions in the diagonal direction become the thinnest and there is a risk that the shape of the lens may become hard to manufacture. This problem can be avoided by adding the image forming lens 21 in the optical path between the image forming lens 16 and the light detecting device 17. Also, by adding two or more image forming lenses in the optical path between the image forming lens 16 and the light detecting device 17, a total of two or more image forming lenses may be configured to be used. Note that the image forming lenses 16 and 21 are replaceable examples of image forming lenses of the present invention.

In the case where two image forming lenses are placed for the light receiving side, regarding the two orthogonal directions, the two lenses can be configured to be used wherein the lenses have power for corresponding different directions, or wherein one lens has power for both of the orthogonal directions and the other lens has power only for one direction. For example, one lens with the same focal length for both of the orthogonal directions and the other lens with different focal lengths for the corresponding orthogonal directions may be configured to be used. In the object detecting apparatus 20 shown in FIGs. 13A and 13B, the image forming lens 21, placed for the side of the light detecting device 17, is a lens that has image forming power only for the Z direction, and the image forming lens 16 is a lens that has image forming power only for the Y direction.

Also, in the case where two or more image forming lenses are placed for the light receiving side, by making the focal lengths of the orthogonal directions (focal lengths (combined focal lengths) of the image forming unit including two or more image forming lenses) different, placing flexibility of the two or more image forming lenses can be increased, and the lenses can be placed without increasing the size of the apparatus. In such case, it is preferable that the conjugate point of the optical system configured with the light detecting device 17 and two or more image forming lenses is made to be infinite in both of the two orthogonal directions. The reason is that the amount of the light detected by the light detecting device 17 can be increased.

In this way, a plurality of image forming lenses may be placed for the light receiving side. By this, the design flexibility of the shape of each image forming lens become increased, and each image forming lens can be configured to be of a lens shape easy to be manufactured.

### <Modification 4 of the first embodiment>

In the modification 4 of the first embodiment, an example will be described in which an image forming mirror is used. Note that in the modification 4 of the first embodiment, there is a case in which descriptions for configuring elements that are the same as in the embodiments already described above may be omitted.

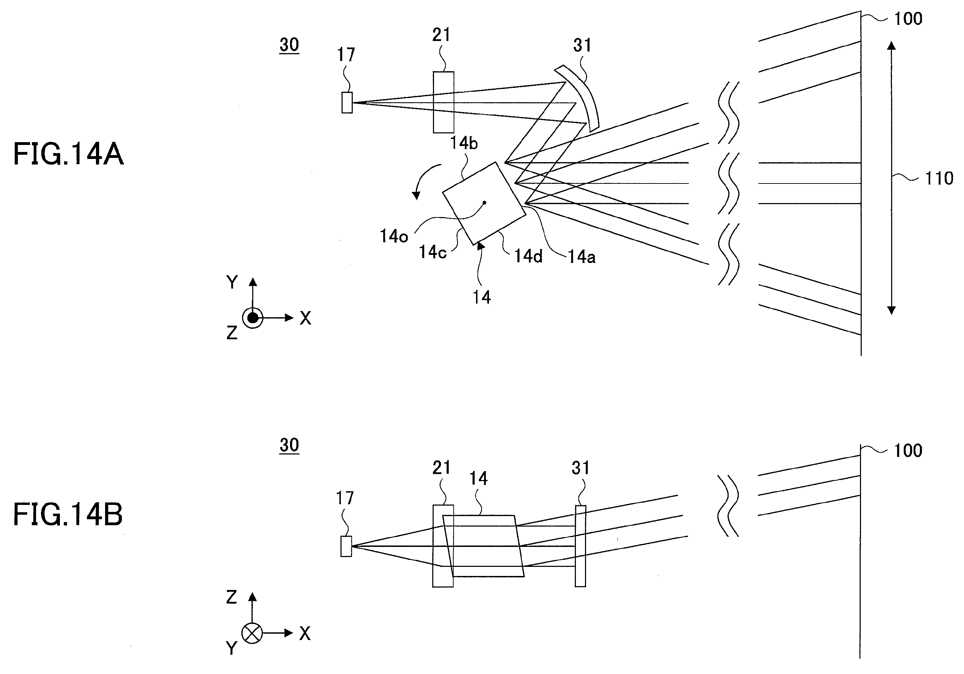

FIGs. 14A and 14B are diagrams illustrating an optical system of a light receiving side of an object detecting apparatus 30 of the modification 4 of the first embodiment of the present invention, where FIG. 14A indicates a cross section parallel to the X-Y plane and FIG. 14B indicates a cross section parallel to the X-Z plane.

Referring to FIGs. 14A and 14B, regarding the object detecting apparatus 30, it is different from the object detecting apparatus 20 of the modification 3 of the first embodiment of the present invention (see FIGs. 13A and 13B) in that the reflecting mirror 15 and the image forming lens 16 are replaced by an image forming mirror 31. The image forming mirror 31 has power only for the Y direction. Note that it is preferable that, similar to the case of the image forming lens 16 described above, the image forming mirror 31 is rectangular shaped because the light usage efficiency can be increased.

In the object detecting apparatus 20 shown in FIGs. 13A and 13B, depending on the outer shape of the image forming lens 16, there is a risk that the light may be shielded. As shown in the object detecting apparatus 30 of FIGs. 14A and 14B, by placing the image forming mirror 31 that can also serve as a reflecting mirror, the risk of shielding the light can be avoided. As a result, it can be prevented that the light usage efficiency decreases and the object detecting accuracy decreases. Note that the image forming lens 21 and the image forming mirror 31 are replaceable examples of the present invention. Also, the image forming mirror 31 is a replaceable example of a reflecting type optical element of the present invention.

Note that in the case where the light beam is radiated from the horizontal direction with respect to the rotating axis 14o of the rotating mirror 14, the Y direction width of the object detecting apparatus tends to increase, but there is some room in the Z direction from the layout point of view. Also, regarding the size of the image forming units such as an image forming lens or an image forming mirror, it is preferable to make it as big as possible because it directly leads to the detecting amount of the light by the light detecting device 17.

Therefore, in order to avoid the decrease of the detecting amount of the light by the light detecting device 17 while preventing the increase of the size of the object detecting apparatus, it is preferable to design in such a way that the width of the image forming unit in the direction parallel to the X-Z plane becomes greater than the width of the image forming unit in the direction parallel to the X-Y plane. By doing this, regarding the distribution of the light after passing the image forming unit, the width in the direction parallel to the X-Z plane becomes greater than the width in the direction parallel to the X-Y plane. Note that the preferable point of designing the image forming unit in this way can be similarly applied for other embodiments or modified embodiments.

The preferable embodiments and modified embodiments are described in detail above, but the present invention is not limited to these embodiments, but various variations and modifications may be made without departing from the scope of the present invention.

## Claims

1. An object detecting apparatus (10) comprising:
a light source (11) configured to emit light,
a deflecting unit (14) configured to rotate around a rotational axis (14o) and have at least two reflecting faces (14a, 14b, 14c, 14d), to deflect the emitted light with the reflecting faces to cause the emitted light to scan a predefined range of an object (100), and to deflect light returning from the predefined range of the object,
an image forming unit (16), and
a light detecting device (17) configured to detect the returning light deflected by the reflecting faces through the image forming unit, wherein
the at least two reflecting faces are placed in a three-dimension orthogonal coordinate system in which the X axis is directed from the rotational axis of the deflecting unit to a center of the predefined range, the Y axis is directed in a scanning direction of the deflecting unit, and the Z axis is directed in an axial direction of the rotational axis of the deflecting unit, and
a travel direction of the emitted light incident on the reflecting faces is parallel to an X-Y plane and a travel direction of the returning light deflected by the reflecting faces, which is to be transmitted orthogonal onto a center of a receiving surface of the light detecting device, is parallel to the X-Y plane,
**characterized in that**:
the at least two reflecting faces have different inclining angles with respect to the rotational axis of the deflecting unit,
the travel direction of the emitted light incident on the reflecting faces is at an angle of less than 90 degrees with respect to the X axis, and
the travel direction of the returning light deflected by the reflecting faces is at an angle of less than 90 degrees with respect to the X axis.

2. The object detecting apparatus as claimed in claim 1, wherein in the deflecting unit (14), the reflecting faces (14a, 14b, 14c, 14d) that deflect the emitted light from the light source (11) are integrated with the reflecting faces that deflect the returning light from the predefined range of the object.

3. The object detecting apparatus as claimed in claim 1 or 2, wherein an angle of the travel direction of the emitted light from the light source (11) incident on the reflecting faces (14a, 14b, 14c, 14d) with respect to the X axis and an angle of the travel direction of the returning light deflected by the reflecting faces, which is to be transmitted orthogonal onto the center of the receiving surface of the light detecting device (17), with respect to the X axis are the same.

4. The object detecting apparatus as claimed in claims 1 through 3, wherein an angle between the travel direction of the emitted light from the light source (11) incident on the reflecting faces (14a, 14b, 14c, 14d) and the travel direction of the deflected light deflected by the reflecting faces is equal to or less than 85 degrees when the emitted light is caused to scan the predefined range of the object (100).

5. The object detecting apparatus as claimed in claims 1 through 4, further comprising:
a radiating side reflecting material (13) and
a light receiving side reflecting material (15), wherein
the emitted light from the light source (11) is transmitted onto the deflecting unit (14) through the radiating side reflecting material, and the returning light deflected by the reflecting unit is transmitted onto the light detecting device through the light receiving side reflecting material, wherein
the light receiving side reflecting material is integrated with the radiating side reflecting material, forming a single reflector.

6. The object detecting apparatus as claimed in claims 1 through 5, wherein the image forming unit (16) includes at least two optical elements whose focal lengths for two directions orthogonal to each other are different.

7. The object detecting apparatus as claimed in claim 6, wherein the at least two optical elements include a reflecting type optical element.

8. The object detecting apparatus as claimed in claim 7, wherein the reflecting type optical element also functions as a reflecting material that reflects the returning light deflected by the reflecting faces.

9. The object detecting apparatus as claimed in claims 1 through 8, wherein regarding a distribution of the light beam after passing through the image forming unit (16), a width in a direction parallel to an X-Z plane is greater than a width in a direction parallel to the X-Y plane.

## Patentansprüche

1. Objektdetektionsvorrichtung (10), die Folgendes umfasst:
eine Lichtquelle (11), die konfiguriert ist, Licht zu emittieren,
eine Ablenkeinheit (14), die konfiguriert ist, sich um eine Drehachse (14o) zu drehen, und mindestens zwei reflektierende Flächen (14a, 14b, 14c, 14d) aufweist, um das emittierte Licht mit den reflektierenden Flächen abzulenken, um das emittierte Licht zu veranlassen, einen vordefinierten Bereich eines Objekts (100) abzutasten, und um das von dem vordefinierten Bereich des Objekts zurückkehrende Licht abzulenken,
eine Bilderzeugungseinheit (16), und
eine Lichtdetektionseinrichtung (17), die konfiguriert ist, das zurückkehrende Licht, das von den reflektierenden Flächen durch die Bilderzeugungseinheit abgelenkt wird, zu detektieren, wobei
die mindestens zwei reflektierenden Flächen in einem dreidimensionalen orthogonalen Koordinatensystem angeordnet sind, in dem die X-Achse von der Drehachse der Ablenkeinheit zu einer Mitte des vordefinierten Bereichs gerichtet ist, die Y-Achse in eine Abtastrichtung der Ablenkeinheit gerichtet ist und die Z-Achse in eine Achsrichtung der Drehachse der Ablenkeinheit gerichtet ist, und
eine Ausbreitungsrichtung des auf den reflektierenden Flächen einfallenden emittierten Lichts parallel zu einer X-Y-Ebene ist und eine Ausbreitungsrichtung des zurückkehrenden Lichts, das von den reflektierenden Flächen abgelenkt wird, das orthogonal auf eine Mitte einer Aufnahmefläche der Lichtdetektionsvorrichtung durchgelassen werden soll, parallel zu der X-Y-Ebene ist,
**dadurch gekennzeichnet, dass**
die mindestens zwei reflektierenden Flächen verschiedene Neigungswinkel bezüglich der Drehachse der Ablenkeinheit aufweisen, und
die Ausbreitungsrichtung des auf den reflektierenden Flächen einfallenden emittierten Lichts bei einem Winkel von weniger als 90 Grad bezüglich der X-Achse liegt, und
die Ausbreitungsrichtung des zurückkehrenden Lichts, das von den reflektierenden Flächen abgelenkt wird, bei einem Winkel von weniger als 90 Grad bezüglich der X-Achse liegt.

2. Objektdetektionsvorrichtung nach Anspruch 1, wobei in der Ablenkeinheit (14) die reflektierenden Flächen (14a, 14b, 14c, 14d), die das von der Lichtquelle (11) emittierte Licht ablenken, in die reflektierenden Flächen integriert sind, die das von dem vordefinierten Bereich des Objekts zurückkehrende Licht ablenken.

3. Objektdetektionsvorrichtung nach Anspruch 1 oder 2, wobei ein Winkel bezüglich der X-Achse der Ausbreitungsrichtung des von der Lichtquelle (11) emittierten Lichts, das auf die reflektierenden Flächen (14a, 14b, 14c, 14d) einfällt, und ein Winkel bezüglich der X-Achse der Ausbreitungsrichtung des zurückkehrenden Lichts, das von den reflektierenden Flächen abgelenkt wird, das orthogonal auf die Mitte der Aufnahmefläche der Lichtdetektionseinrichtung (17) durchgelassen werden soll, gleich sind.

4. Objektdetektionsvorrichtung nach den Ansprüchen 1 bis 3, wobei ein Winkel zwischen der Ausbreitungsrichtung des von der Lichtquelle (11) emittierten Lichts, das auf die reflektierenden Flächen (14a, 14b, 14c, 14d) einfällt, und der Ausbreitungsrichtung des von den reflektierenden Flächen abgelenkten Lichts kleiner oder gleich 85 Grad sind, wenn das emittierte Licht veranlasst wird, den vordefinierten Bereich des Objekts (100) abzutasten.

5. Objektdetektionsvorrichtung nach den Ansprüchen 1 bis 4, die ferner Folgendes umfasst:
ein auf der Abstrahlseite reflektierendes Material (13) und
ein auf der Lichtaufnahmeseite reflektierendes Material (15), wobei
das von der Lichtquelle (11) emittierte Licht durch das auf der Abstrahlseite reflektierende Material zu der Ablenkeinheit (14) durchgelassen wird, und das zurückkehrende Licht, das von der Ablenkeinheit abgelenkt wird, durch das auf der Lichtaufnahmeseite reflektierende Material zu der Lichtdetektionseinrichtung durchgelassen wird, wobei
das auf der Lichtaufnahmeseite reflektierende Material in das auf der Abstrahlseite reflektierende Material integriert ist, wobei sie einen einzigen Reflektor bilden.

6. Objektdetektionsvorrichtung nach den Ansprüchen 1 bis 5, wobei die Bilderzeugungseinheit (16) mindestens zwei optische Elemente enthält, deren Brennweiten in zwei zueinander senkrechten Richtungen unterschiedlich sind.

7. Objektdetektionsvorrichtung nach Anspruch 6, wobei die mindestens zwei optischen Elemente ein optisches Element des reflektierenden Typs enthalten.

8. Objektdetektionsvorrichtung nach Anspruch 7, wobei das optische Element des reflektierenden Typs auch als ein reflektierendes Material wirkt, das das zurückkehrende Licht, das von den reflektierenden Flächen abgelenkt wird, reflektiert.

9. Objektdetektionsvorrichtung nach den Ansprüchen 1 bis 8, wobei bezüglich einer Verteilung des Lichtstrahls nach dem Durchlaufen der Bilderzeugungseinheit (16) eine Breite in einer Richtung parallel zu einer X-Z-Ebene größer als eine Breite in einer Richtung parallel zu der X-Y-Ebene ist.

## Revendications

1. Appareil de détection d'objet (10) comprenant :
une source de lumière (11) configurée pour émettre une lumière,
une unité de déflexion (14) configurée pour tourner autour d'un axe de rotation (14o) et pour avoir au moins deux faces de réflexion (14a, 14b, 14c, 14d), pour défléchir la lumière émise avec les faces de réflexion pour amener la lumière émise à balayer une plage prédéfinie d'un objet (100), et pour défléchir la lumière revenant de la plage prédéfinie de l'objet,
une unité de formation d'image (16), et
un dispositif de détection de lumière (17) configuré pour détecter la lumière de retour défléchie par les faces de réflexion par l'intermédiaire de l'unité de formation d'image, dans lequel
lesdites au moins deux faces de réflexion sont placées dans un système de coordonnées orthogonal tridimensionnel dans lequel l'axe X est dirigé de l'axe de rotation de l'unité de déflexion vers un centre de la plage prédéfinie, l'axe Y est dirigé dans une direction de balayage de l'unité de déflexion, et l'axe Z est dirigé dans une direction axiale de l'axe de rotation de l'unité de déflexion, et
une direction de propagation de la lumière émise frappant les faces de réflexion est parallèle à un plan X-Y et une direction de propagation de la lumière de retour défléchie par les faces de réflexion, qui doit être émise orthogonalement sur un centre d'une surface de réception du dispositif de détection de lumière, est parallèle au plan X-Y,
**caractérisé en ce que** :
lesdites au moins deux faces de réflexion ont différents angles d'inclinaison par rapport à l'axe de rotation de l'unité de déflexion,
la direction de propagation de la lumière émise frappant les faces de réflexion forme un angle inférieur à 90 degrés avec l'axe X, et
la direction de propagation de la lumière de retour défléchie par les faces de réflexion forme un angle inférieur à 90 degrés avec l'axe X.

2. Appareil de détection d'objet selon la revendication 1, dans lequel, dans l'unité de déflexion (14), les faces de réflexion (14a, 14b, 14c, 14d) qui défléchissent la lumière émise par la source de lumière (11) sont intégrées avec les faces de réflexion qui défléchissent la lumière de retour provenant de la plage prédéfinie de l'objet.

3. Appareil de détection d'objet selon la revendication 1 ou 2, dans lequel un angle de la direction de propagation de la lumière émise par la source de lumière (11) frappant les faces de réflexion (14a, 14b, 14c, 14d) par rapport à l'axe X et un angle de la direction de propagation de la lumière de retour défléchie par les faces de réflexion, qui doit être émise orthogonalement sur le centre de la surface de réception du dispositif de détection de lumière (17), par rapport à l'axe X sont identiques.

4. Appareil de détection d'objet selon les revendications 1 à 3, dans lequel un angle entre la direction de propagation de la lumière émise par la source de lumière (11) frappant les faces de réflexion (14a, 14b, 14c, 14d) et la direction de propagation de la lumière défléchie qui est défléchie par les faces de réflexion est inférieur ou égal à 85 degrés lorsque la lumière émise est amenée à balayer la plage prédéfinie de l'objet (100).

5. Appareil de détection d'objet selon les revendications 1 à 4, comprenant en outre :
un matériau de réflexion côté rayonnement (13), et
un matériau de réflexion côté réception de lumière (15), dans lequel
la lumière émise par la source de lumière (11) est transmise sur l'unité de déflexion (14) par l'intermédiaire du matériau de réflexion côté rayonnement, et la lumière de retour défléchie par l'unité de réflexion est transmise sur le dispositif de détection de lumière par l'intermédiaire du matériau de réflexion côté réception de lumière, dans lequel
le matériau de réflexion côté réception de lumière est intégré avec le matériau de réflexion côté rayonnement, formant un réflecteur unique.

6. Appareil de détection d'objet selon les revendications 1 à 5, dans lequel l'unité de formation d'image (16) comprend au moins deux éléments optiques dont les longueurs focales pour deux directions orthogonales l'une à l'autre sont différentes.

7. Appareil de détection d'objet selon la revendication 6, dans lequel lesdits au moins deux éléments optiques comprennent un élément optique de type à réflexion.

8. Appareil de détection d'objet selon la revendication 7, dans lequel l'élément optique de type à réflexion agit également en tant que matériau de réflexion qui réfléchit la lumière de retour défléchie par les faces de réflexion.

9. Appareil de détection d'objet selon les revendications 1 à 8, dans lequel, en ce qui concerne une distribution du faisceau de lumière après qu'il est passé à travers l'unité de formation d'image (16), une largeur dans une direction parallèle à un plan X-Z est supérieure à une largeur dans une direction parallèle au plan X-Y.
